# EUROPEAN PATENT APPLICATION

(11) **EP 4 726 626 A1**
(43) Date of publication of application: **15.04.2026**
(21) Application number: 24306661.0
(22) Date of filing: 10.10.2024
(51) Int. Cl.: G06Q 10/107, G06Q 20/38, H04L 9/32, H04L 9/00

(54) **METHOD TO ISSUE A DIGITAL STAMP FOR CORRESPONDENCE SERVICES**

(71) Applicant: THALES DIS FRANCE SAS, 92190 Meudon (FR)
(72) Inventor: BRUNA, Hugo, 84100 Orange (TF); SCHALLDACH, Thomas, 27343 Bu tehrad (CZ)
(74) Representative: Quintero Romero, Manuel

(57) **Abstract**

The invention provides a method to issue a digital stamp for correspondence services, the method comprising the steps of:
a stamp vendor receives from a requestor a request to issue the digital stamp for a particular correspondence, the request comprising addresses of a sender and a receiver;
the stamp vendor encrypts at least the addresses of the sender and the receiver by using a public key of a delivery company, and generates a digital stamp file comprising at least the encrypted addresses;
the stamp vendor publishes the digital stamp file in a distributed ledger as a transaction, and receives back a transaction identifier; and
the stamp vendor transfers the transaction identifier, or a derived form thereof, to the requestor in order to be included in the correspondence as the digital stamp.

## Description

### TECHNICAL FIELD

This invention pertains to the field of correspondence services and, in particular, to generation of digital stamps for postal services.

The invention is particularly useful for privacy-preserving online generation of digital stamps that are interoperable among different entities, such as stamp vendors and delivery companies.

### BACKGROUND OF THE INVENTION

Despite the advent of e-mail services and social media, physical postal correspondence is still used in various contexts, ranging from mailing important (e.g., tracked or acknowledgement-of-receipt) letters business or legal-wise to postal cards addressing family or friends with an emotional touch. Further, most of items still need to be ship mailed as packages. Nevertheless, the digitalization of the sector is lagging and today it is found a de-synchronization with state-of-art technologies.

Postal services, such as *La Poste* in France, needs to know the particulars (e.g., size, weight, expected delivery time, destination address, etc.) of the correspondence (e.g., letters or packages) to charge for the delivery service. To this end, stamps are used. For instance, *La Poste* has different rates for delivering the correspondence within France in difference time windows, but also specific stamps for intra-Europe delivery or even international services. Recently, stamps for eco-friendly deliveries have popped up in some European postal services.

Stamps can be bought today in a number of places such as a cashier or self-service machines at *La Poste* offices, or even at some dedicated shops or official newsagents (such as *Tabac* in France). Some national postal services, such as *Deutschepost* in Germany, are introducing new user-friendly stamp services (such as *INTERNETMARKE* solution) where you can select the delivery service wished and print the associated stamp (in a classical stamp-format or as QR code) directly at home or office; or (such as PORTO solution) where user directly handwrites on the correspondence some pre-formatted code as per the stamp desired and purchased online. Nevertheless, these solutions remain regional and doesn't allow e.g., light-luggage travellers to send back home postal cards eventually.

Moreover, these solutions still need the writing of the sender and receiver addresses somewhere visible; thus, posing some privacy concerns for many users.

Therefore, there is a need in the industry for an interoperable and privacy-preserving postal services.

### SUMMARY OF THE INVENTION

The present invention provides a solution for the aforementioned problems by a method to issue a digital stamp for correspondence services according to claim 1, a method to deliver a correspondence according to claim 6, a stamp vendor according to claim 11, a delivery entity according to claim 12, and a system according to claim 13. In dependent claims, preferred embodiments of the invention are defined.

In a first inventive aspect, the invention provides a method to issue a digital stamp for correspondence services, the method comprising the steps of:
- a stamp vendor receives from a requestor a request to issue the digital stamp for a particular correspondence, the request comprising addresses of a sender and a receiver;
- the stamp vendor encrypts at least the addresses of the sender and the receiver by using a public key of a delivery entity, and generates a digital stamp file comprising at least the encrypted addresses;
- the stamp vendor publishes the digital stamp file in a distributed ledger as a transaction, and receives back a transaction identifier; and
- the stamp vendor transfers the transaction identifier, or a derived form thereof, to the requestor in order to be included in the correspondence as the digital stamp.

In the present invention, a user or a user's device (e.g., using a browser or mobile app or even onsite) purchases to a (e.g., online) stamp vendor (e.g., *Tabac* in France) a specific stamp to send or mail a specific correspondence (e.g., letter or package) with specific properties (e.g., weight, dimensions, fragile-labelled) in specific conditions (e.g., delivery time, tracked, ack-of-receipt). The user submits, at least, the receiver address (while getting the sender one e.g., through his/her account).

Then, the stamp vendor, knowing the delivery entity or company (e.g., *La Poste*, *Chronopost*, or *Collisimo* in France, *Deutschepost* in Germany, or *Correos* in Spain) that will carry out the actual mailing and/or delivery of the correspondence, encrypts these addresses by using the public key of the chosen delivery entity, and then generates a digital stamp file embedding the necessary information about the delivery including, inter alia, the encrypted addresses.

According to the invention, there is an immutable distributed ledger (i.e., blockchain network), public or private, accessible by (at least) the stamp vendors and the delivery entities where the stamp vendors publish the digital stamp files. As known, this posting or publishing of digital stamp files are considered as transactions (preferably with its status) and, when a number of transactions happen and are confirmed, they form a chained block (i.e., by using cryptography). Whenever a new transaction happens on the blockchain, a record of that operation is added to participant's ledger and hence the stamp vendor of the invention receives back the transaction identifier.

After a successful publishing, the stamp vendor communicates this transaction identifier to the user (i.e., the requestor) which will include it in the correspondence as the digital stamp. This identifier can be included as such or be derived to a more user-friendly form beforehand.

Advantageously, this paper-less solution ensures that Personal Identifiable Information (PII) such as the user's personal details or addresses remain encrypted and only exposable to the company entrusted with the delivery act. From a user experience standpoint, it is easier and faster to purchase and get the stamp (i.e., fully online).

The invention also provides benefits to the electronic mailing or correspondence services. As today there is an increasing concern (i.e., bypassing of privacy rules, overwhelming) about some spamming techniques, the invention may discourage spammers as users can be charged (e.g., purchasing of digital stamps) per electronic correspondence (i.e., email).

The invention thus places a "digital stamp" vendor between the client and the delivery entity. The user or requestor, though the messaging service (e.g., Gmail, Outlook, Apple Mail, Yahoo), requests the stamp vendor (embodied as a new entity or the sender's Simple Mail Transfer Protocol, SMTP, server) to send a particular email to a particular email address. The sender's SMTP server then encrypts (directly or through other entity) the addresses (To: persona@companya.com; Domain: companya.com; From: personb@companyb.com; Domain: company.com) using e.g., receiver's SMTP server public key and generates the digital stamp file.

The sender's SMTP server then publishes it to the distributed ledger and gets back the transaction identifier that is attached e.g., to the email metadata before or after SMTP formatting. The DNS will only send back the receiver's IP address to the sender's SMTP server when it verifies that the transaction identifier passed over by the sender's SMTP server together with the request is actually published with a non-revoked status.

In a particular embodiment, the stamp vendor generates the digital stamp file using a Visible Digital Seals, VDS, format. Alternatively, and preferably, the stamp vendor generates the digital stamp file using a Verifiable Credentials, VC, format. In particular, the digital stamp file is generated according to W3C's Verifiable Credentials Data Model v2.0.

In a classical W3C's Verifiable Credentials ecosystem, an "issuer" asserts certain claims about the subject or "holder", thus creating a verifiable credential from these claims, and transmitting the verifiable credential to the holder. The holder then registers certain identifiers (e.g., Decentralized Identifiers, DID) and schemas to a "Verifiable Data Registry" that maintains them. When the holder wishes to selectively disclose his/her credentials to a "verifier", it generates a Verifiable Presentation (similar in schema to a Verifiable Credential) that the verifier can validate using the verifiable data registry.

The present invention relies on this ecosystem where the stamp vendor (i.e., issuer) issues digital stamps (i.e., verifiable credentials) to users or requestors (i.e., holder) which can be validated by the delivery company (i.e., verifier) using the distributed ledger (i.e., verifiable data registry).

In a particular embodiment, the stamp vendor encodes the transaction identifier received from the blockchain into alphanumeric characters, such as Base36 scheme, for the requestor of the digital stamp to handwrite it on the correspondence. Advantageously, using alphanumeric characters, preferably in capital letters, the system is less prone to errors and can be further enhanced by avoiding some confusing or non-readable characters such as letter "O" and number "0").

In a particular embodiment, the stamp vendor encodes the transaction identifier received from the blockchain into a QR code for the requestor of the digital stamp to print it on the correspondence.

In a particular embodiment, the digital stamp file further comprises a nonce, and the stamp vendor signs the digital stamp file with its private key before publishing it in a distributed ledger as the transaction. Advantageously, the nonce ensures that the digital stamp file is unique; while stamp vendors signature guarantees its integrity.

The digital stamp may contain (e.g., as claims if it follows the Verifiable Credential scheme) further information about the type of stamp (if structured), its price, the delivery company, the stamp vendor, the weight of the correspondence, etc. Preferably, this information can be also encrypted.

In a second inventive aspect, the invention provides a method to deliver a correspondence that includes a digital stamp issued according to the method of any of the embodiments of the first inventive aspect, the method comprising the steps of:
- a delivery entity gets the correspondence and reads the transaction identifier;
- the delivery entity fetches the digital stamp file associated to the transaction identifier from the distributed ledger and decrypts, at least, the addresses of the sender and the receiver by using its private key;
- the delivery entity delivers, by itself or through an entrusted delivery partner, the correspondence to the receiver address.

In a particular embodiment, after fetching the digital stamp file and, optionally, verify its integrity and signature of the stamp vendor, the delivery entity triggers the revocation of the digital stamp file in the distributed ledger by using the transaction identifier. That is, the delivery company informs the stamp vendor that the digital stamp file has been safely fetched for the stamp vendor to revoke it.

As known, for international or even inter-regional deliveries, the delivery entities may have bilateral or regional agreements (especially when correspondence passes through several countries) with entrusted delivery partner(s). Typically, all dispatches (*depêches* in French) are well-labelled and contains the information from and to countries and the type of post service (e.g., priority, economy).

Therefore, no matter whether there is a single delivery entity or a sequence of them, in a particular embodiment, the delivery entity generates a delivery file comprising metadata and the transaction identifier, and publishes the delivery file, or a modified form thereof, in a second distributed ledger as a delivery transaction, receiving back a delivery transaction identifier. This is helpful to track sequentially the transfer of the correspondence.

In a preferred embodiment, the delivery entity only publishes the signature of the delivery file, as a modified form thereof, in the second distributed ledger.

In a particular embodiment, the delivery entity includes both the delivery file and the delivery transaction identifier in the correspondence. This inclusion of the identifier may be embodied as print of coded information (e.g., QR code) on the surface of the envelope readable/understandable by e.g., subsequent entrusted delivery partners.

In a particular embodiment, after successfully delivering the correspondence to the receiver address, the delivery entity revokes the delivery file, or a modified form thereof, in the second distributed ledger by using the delivery transaction identifier. The same applies for successfully transferring the correspondence to the subsequent entrusted delivery partner.

In a third inventive aspect, the invention provides a stamp vendor for issuing a digital stamp for correspondence services, the stamp vendor being configured to:
- receives, from a requestor, a request to issue the digital stamp for a particular correspondence, the request comprising addresses of a sender and a receiver;
- retrieve the public key of a delivery company and encrypt at least the addresses of the sender and the receiver,
- generate a digital stamp file comprising at least the encrypted addresses;
- publish the digital stamp file in a distributed ledger as a transaction, and receives back a transaction identifier; and
- transfer the transaction identifier, or a derived form thereof, to the requestor in order to be included in the correspondence as the digital stamp.

In a fourth inventive aspect, the invention provides a delivery entity for delivering a correspondence that includes a digital stamp issued according to the method of any of the embodiments of the first inventive aspect, the delivery entity being configured to:
- get the correspondence and read the transaction identifier;
- fetch the digital stamp file associated to the transaction identifier from the distributed ledger and decrypt, at least, the addresses of the sender and the receiver by using its private key; and
- deliver, by itself or through an entrusted delivery partner, the correspondence to the receiver address.

In a fifth inventive aspect, the invention provides system for correspondence services, the system comprising:
- a stamp vendor for issuing a digital stamp for a correspondence according to any of the embodiments of the third inventive aspect;
- a distributed ledger for storing digital stamp files as transactions, and return transaction identifiers after appending them; the distributed ledger being accessible by at least the stamp vendors and delivery entities; and
- a delivery entity for delivering the correspondence to the receiver address according to any of the embodiments of the fourth inventive aspect.

In a particular embodiment, the system further comprises a second distributed ledger for storing delivery files and return delivery transaction identifiers after appending them; the second distributed ledger being accessible by delivery entities.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig. 1: shows a graphic sequence for issuing a digital stamp for some correspondence according to an embodiment of the invention;
- Fig. 2: illustrates a schematic flowchart to issue a digital stamp according to an embodiment of the invention;
- Fig. 3: illustrates a schematic flowchart to deliver a correspondence that includes a digital stamp according to an embodiment of the invention.

### DETAILED DESCRIPTION OF THE INVENTION

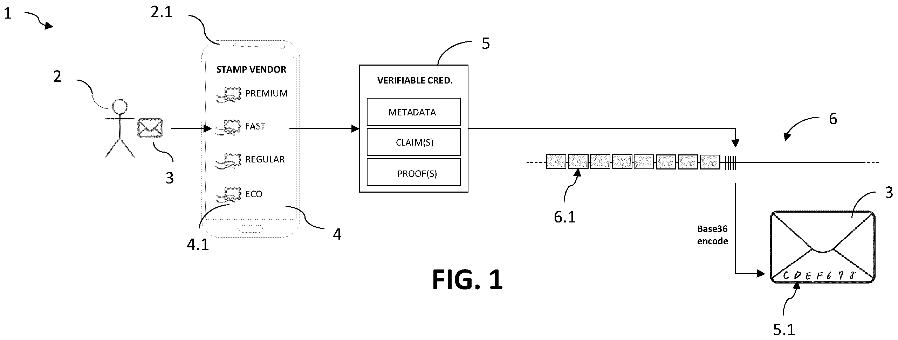

**Figure 1** depicts a graphic sequence where a stamp vendor 4 issues a digital stamp 5.1 to a user 2, or requestor, wishing to mail some correspondence 3. The user 2 can physically move (i.e., onsite) to any newsagent shop, dedicated stamp shops, cashiers or self-service machines of the national postal services, or the like, to buy the needed digital stamp. Also, as per shown in figure 1, the user 2 equally use its connected device 2.1 and install from app store the stamp vendor's app, or access the stamp vendor website through browser. There are no restrictions as per the user's connected device 2.1 e.g., smartphone, laptop, PC desktop, etc. Throughout this section, terms such as user, user's device, sender and requestor may be used interchangeably. In an embodiment, the stamp vendor's website or app can also display geographically the surrounding stamp vendor offices for the user to perform the transaction on site, or the surrounding postal service terminals where the user can send the "digital stamped" correspondence (not shown).

Referring back to figure 1, the user 2 then submits, inputs, or orally transmits the necessary details for the shipping to the stamp vendor, at least, the receiver address and the sender address, but also (opt.) the type of correspondence (e.g., letter or package), specific correspondence properties (e.g., weight, dimensions, fragile-labelled), specific shipping conditions (e.g., expected delivery time, tracked, ack-of-receipt enabled), etc. As known, if app or website is used, after account authentication (or even digital stamp payment) some fields can be pre-filled such as sender's address. Alternatively, the stamp vendor can directly provide different stamp rates for the user to choose the most suitable one for his/her needs. In a further embodiment, the user can directly upload picture(s) of the correspondence 3 (e.g., recto-verso of letter/envelope) to estimate/verify dimensions, and/or scan visible marks (e.g., logos, handwritten sentences in case of post cards, etc.); which can be afterwards accessible by the delivery entity to be matched against new pictures taken by delivery entity staff or automatic dispatching machines. In this case, any of the visible (and uniquely recognizable) marks may act as the digital stamp according to the invention.

As shown in figure 1, the user is prompted with different stamp options 4.1 (and optionally associated rates) for sending the correspondence. User may add the whished stamps to cart and, upon clicking check out, the payment gateway takes over to transmit the user's payment details to his/her bank for approval (this is not part of the invention). If payment is successful, the stamp vendor 4 proceeds with the generation of a digital stamp file 5.

According to some embodiments, the digital stamp file 5 is embodied as a Visible Digital Seals (VDS) formatted file (not shown) or a Verifiable Credentials (VC) formatted file (as per figure 1). In figure 1, the stamp vendor (as issuer) issues different claims about the correspondence and/or user such as type of stamp (or price), weight, dimensions, delivery entity, stamp vendor, and encrypted sender's and receiver's addresses. These all are then formatted as Verifiable Credential.

Since the correspondence delivery particulars are known at the time of producing the digital stamp file, the entrusted delivery entity is also known, and hence part or all of the claims can be encrypted e.g., using the delivery entity public key (i.e., which is publicly accessible). According to the invention, at least the sender's and receiver's addresses are encrypted.

As an example, the structure of the VC-formatted digital stamp file 5 may be:
- Metadata field comprises stamp vendor (i.e., vc issuer), type of stamp (i.e., vc type).
- Claims field comprises delivery company, weight of the correspondence, price, and sender and receiver addresses encrypted.
- Proof(s) field comprises the nonce.

Other usual VC attributes will be filled according to W3C's VC standard.

To improve the security of the VC-formatted digital stamp file 5, it can further comprise a nonce - in the proof(s) section - that can help verifying its uniqueness afterwards; and can be signed by the stamp vendor 4 upon its generation with its private key. This helps verifying its authenticity and integrity.

The stamp vendor then proceeds with publishing the VC-formatted and signed digital stamp file 5 in the distributed ledger 6 as a new transaction with its associated status. Either after a single transaction or a few new transactions, a new chained block 6.1 is formed (i.e., by hashing or other crypto means). The stamp vendor 4 (i.e., backend services) can be a node or participant of this distributed ledgers 6 or blockchain (to be used interchangeably) and, as a new operation happens in the blockchain, a record is added to stamp vendor's ledger so a transaction identifier 5.1 is returned. The return of the transaction identifier is associated as a successful transaction publishing.

All these steps may happen during the same session (preferably) or after logging-out. The stamp vendor 4 may communicate the transaction identifier to the user 2 orally (if onsite use case), displaying it in the app or web browser, or by sending a push notification (e.g., SMS, app notification) afterwards. This transaction identifier 5.1 is considered as the digital stamp according to the invention. If onsite (or at home e.g., printer-equipped), optionally, the stamp vendor (or the user) may directly print it on the correspondence 3 surface. Before being ready to be included in the correspondence, the stamp vendor may encode the transaction identifier in either a machine-readable code (e.g., QR code) or a more user-friendly code (e.g., Base36 code).

Preferably, as shown in figure 1, the user gets the transaction identifier 5.1 and handwrites it on the surface in a visible part. Further, the user may need to add some generic placeholders such as asterisk (**) or symbols (e.g., #, Δ, ≡) nearby (before, after, or both) the transaction identifier to better identify it by the delivery entity. Additionally, or alternatively, the transaction identifier 5.1 is placed (e.g., handwritten) on the top right corner of the correspondence 3, i.e., the classical spot for traditional stamps.

The user 2 then proceeds to send the "digital stamped" correspondence (e.g., incl. transaction identifier or derivation thereof) to the postal service terminal (e.g., delivery entity terminal or similar), not shown.

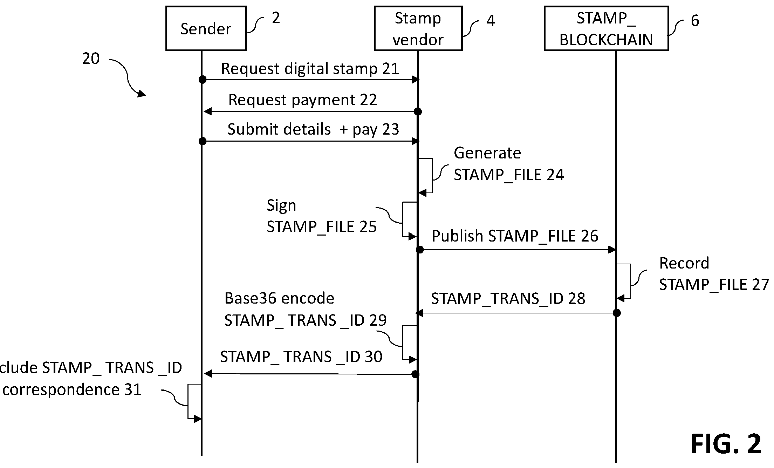

**Figure 2** shows a schematic flowchart about a method 20 to issue a digital stamp 5.1 according to an embodiment of the invention.

As described in figure 1, firstly, the user, requestor, or sender 2 goes to an online stamp vendor 4 and requests 21 a digital stamp for his/her correspondence 3. The stamp vendor prompts different available stamp options 4.1 and, after chosen by sender, requests 22 the payment of the service. Before or after payment, sender submits 23 necessary details for the shipping of the correspondence.

After the transaction payment is done, the stamp vendor 4 generates 24 the digital stamp file (STAMP_FILE) 5 in a VDS or, more preferably, VC format. The STAMP_FILE 5 comprises (not shown) information about the type of stamp, the delivery entity, the price, the stamp vendor, the weight/dimensions of the correspondence 3, a nonce, etc. and the encrypted sender's and receiver's addresses to preserve their privacy. The encryption is done by using the public key of the delivery entity 7 that is publicly known. The nonce ensures that the STAMP_FILE is unique, while the STAMP_FILE 5 is signed 25 by the stamp vendor with its private key to ensure integrity.

Then the stamp vendor 4 publishes 26 the STAMP_FILE 5 in the distributed ledger (STAMP_BLOCKCHAIN) 6, which creates or records 27 a transaction regarding the STAMP_FILE and return 28 the transaction identifier (STAMP TRANS_ID) 5.1 associated to it. According to the invention, the STAMP TRANS_ID returned plays the role of digital stamp. Optionally, to avoid non-readable codes, the stamp vendor encodes 29, itself or through other service, STAMP TRANS_ID 5.1 in a Base36 format. The Base36 reduces the digits from 0 to 9 and the letters of the English alphabet (i.e., 26 characters from A to Z). Preferably, the encoding base can be still adjusted (e.g., to z-base-32 to avoid any misunderstood between letters 'O', 'I', 'L' and digits '0', '1' when reading the handwritten STAMP TRANS_ID).

The stamp vendor 4 finally returns 30 to the sender 2 STAMP TRANS_ID (Base36/ z-base-32 encoded or not), who visibly handwrites it 31 (in capital letters) on the correspondence 3 at, preferably, the classical stamp position (i.e., top right).

Advantageously, there is no need to handwrite the sender's and receiver's addresses as well on the correspondence as those can be already found encrypted in the STAMP_FILE 5 of the STAMP_BLOCKCHAIN 6. Finally, the sender 2 transmits the correspondence 3 to the delivery entity 7.

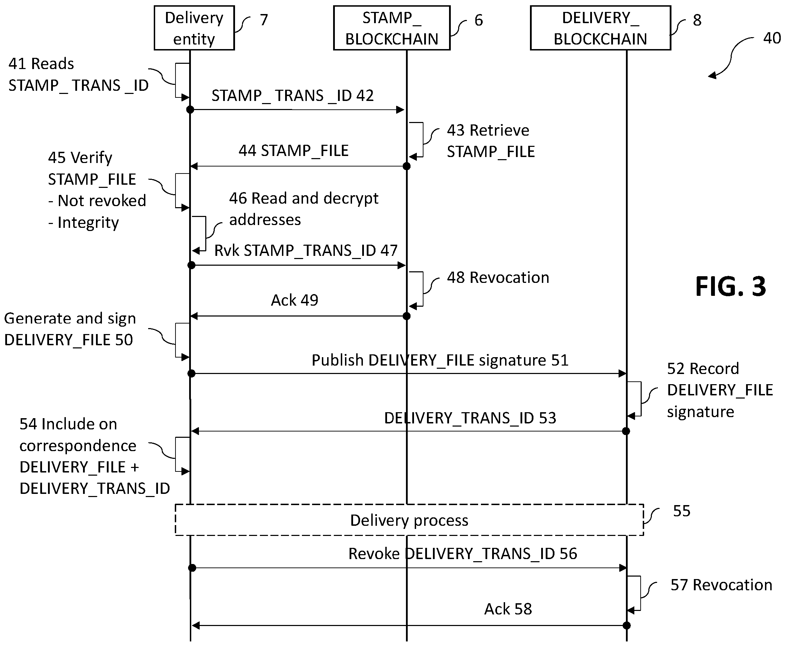

**Figure 3** shows a schematic flowchart of a method 40 to deliver a correspondence 3 that includes a digital stamp 5.1 according to an embodiment of the invention.

The delivery entity 7 gets the correspondence 3, reads 41 the STAMP TRANS_ID 5.1 (produced e.g., by the method of figure 1), and verifies 42 if the STAMP TRANS_ID exists in the STAMP_BLOCKCHAIN 6. Upon fetching request 42 from the delivery entity using the STAMP TRANS_ID 5.1, STAMP_BLOCKCHAIN retrieves 43 and sends back 44 the STAMP_FILE 5 associated to it.

The delivery entity verifies 45 that the status of the just retrieved STAMP_FILE 5 is not revoked and verifies that the STAMP_FILE was signed by a trusted stamp vendor. Then, the delivery entity 7 reads 46 the data contained in the STAMP_FILE and decrypts the sender and receiver addresses with its delivery entity private key. Once the verification(s) are automatically performed, the delivery entity requests the revocation 47 of the the STAMP_FILE thanks to the STAMP TRANS_ID. The STAMP_BLOCKCHAIN updates 48 the status of the STAMP_FILE associated to the STAMP_TRANS_ID and sends 49 an acknowledgment. Advantageously, this revocation prevents against any malicious re-usage of the STAMP_FILE.

The delivery entity 7 generates and signs 50 a delivery file (DELIVERY_FILE) and requests 51 its publication into a second distributed ledger 8 (DELIVERY_BLOCKCHAIN). In some embodiments, the delivery entity 7 only publishes the signature of the DELIVERY_FILE into the DELIVERY_BLOCKCHAIN. The DELIVERY_FILE can be generated by using VDS or VC format. In embodiments, the DELIVERY_FILE comprises the STAMP TRANS_ID 5.1 and some metadata provided by the delivery entity.

As an example, the structure of the VC-formatted digital stamp file 5 may be:
- Metadata field comprises delivery entity (i.e., vc issuer).
- Claims field comprises weight of the correspondence, sender and receiver addresses encrypted, type of transport, and any other usual information for correspondence transport by the delivery company.
- Proof(s) field comprises the nonce.

Other usual VC attributes will be filled according to W3C's VC standard.

The DELIVERY_BLOCKCHAIN 8 publishes 52 the DELIVERY_FILE (alike the STAMP_BLOCHAIN 6 published the STAMP_FILE 52) and sends back 53 a DELIVERY_TRANS_ID.

The delivery entity 7, in temporal possession of the correspondence 3, (over-)writes 54 the DELIVERY_FILE on the correspondence. In further embodiments, when the delivery entity 7 only publishes the signature of the DELIVERY_FILE in DELIVERY_BLOCKCHAIN, the delivery entity includes both the DELIVERY_FILE itself and the DELIVERY_TRANS_ID. In some embodiments, this information can be printed on the correspondence a one or more codes (e.g., QR or bar- codes).

Once the correspondence is actually delivered 55 to the official receiver (e.g., its address upon meeting any further conditions such as signature, etc.), the (final) delivery entity 7 requests 57 the revocation of the DELIVERY_TRANS_ID in the DELIVERY_BLOCKCHAIN 8 to officially confirm that it has been delivered and the DELIVERY_FILE cannot be reused. As said, this process can be sequentially repeated by different (entrusted) delivery entities to prove they took over the delivery of the correspondence 3 until its final destination.

## Claims

1. A method to issue a digital stamp for correspondence services, the method comprising the steps of:
- a stamp vendor receives from a requestor a request to issue the digital stamp for a particular correspondence, the request comprising addresses of a sender and a receiver;
- the stamp vendor encrypts at least the addresses of the sender and the receiver by using a public key of a delivery entity, and generates a digital stamp file comprising at least the encrypted addresses;
- the stamp vendor publishes the digital stamp file in a distributed ledger as a transaction, and receives back a transaction identifier; and
- the stamp vendor transfers the transaction identifier, or a derived form thereof, to the requestor in order to be included in the correspondence as the digital stamp.

2. The method according to claim 1, wherein the stamp vendor generates the digital stamp file using a Visible Digital Seals, VDS, or a Verifiable Credentials, VC, format.

3. The method according to any of claims 1 or 2, wherein the stamp vendor encodes the transaction identifier received from the blockchain into alphanumeric characters, such as Base36 scheme, for the requestor of the digital stamp to handwrite it on the correspondence.

4. The method according to any of claims 1 or 2, wherein the stamp vendor encodes the transaction identifier received from the blockchain into a QR code for the requestor of the digital stamp to print it on the correspondence.

5. The method according to any of claims 1 to 4, wherein the digital stamp file further comprises a nonce, and the stamp vendor signs the digital stamp file with its private key before publishing it in a distributed ledger as the transaction.

6. A method to deliver a correspondence that includes a digital stamp issued according to the method of any of the claims 1 to 5, the method comprising the steps of:
- a delivery entity gets the correspondence and reads the transaction identifier;
- the delivery entity fetches the digital stamp file associated to the transaction identifier from the distributed ledger and decrypts, at least, the addresses of the sender and the receiver by using its private key;
- the delivery entity delivers, by itself or through an entrusted delivery partner, the correspondence to the receiver address.

7. The method according to claim 6, wherein, after fetching the digital stamp file and, optionally, verify its integrity and signature of the stamp vendor, the delivery entity triggers the revocation of the digital stamp file in the distributed ledger by using the transaction identifier.

8. The method according to any of claims 6 or 7, wherein the delivery entity generates a delivery file comprising metadata and the transaction identifier, and publishes the delivery file, or a modified form thereof, in a second distributed ledger as a delivery transaction, receiving back a delivery transaction identifier.

9. The method according to claim 8, wherein the delivery entity includes both the delivery file and the delivery transaction identifier in the correspondence.

10. The method according to any of claims 8 or 9, wherein the delivery entity only publishes the signature of the delivery file, as a modified form thereof, in the second distributed ledger.

11. The method according to any of claims 8 to 10, wherein, after successfully delivering the correspondence to the receiver address, the delivery entity revokes the delivery file, or the modified form thereof, in the second distributed ledger by using the delivery transaction identifier.

12. A stamp vendor for issuing a digital stamp for correspondence services, the stamp vendor being configured to:
- receives, from a requestor, a request to issue the digital stamp for a particular correspondence, the request comprising addresses of a sender and a receiver;
- retrieve the public key of a delivery company and encrypt at least the addresses of the sender and the receiver,
- generate a digital stamp file comprising at least the encrypted addresses;
- publish the digital stamp file in a distributed ledger as a transaction, and receives back a transaction identifier; and
- transfer the transaction identifier, or a derived form thereof, to the requestor in order to be included in the correspondence as the digital stamp.

13. A delivery entity for delivering a correspondence that includes a digital stamp issued according to the method of any of the claims 1 to 5, the delivery entity being configured to:
- get the correspondence and read the transaction identifier;
- fetch the digital stamp file associated to the transaction identifier from the distributed ledger and decrypt, at least, the addresses of the sender and the receiver by using its private key; and
- deliver, by itself or through an entrusted delivery partner, the correspondence to the receiver address.

14. A system for correspondence services, the system comprising:
- a stamp vendor for issuing a digital stamp for a correspondence according to claim 12;
- a distributed ledger for storing digital stamp files as transactions, and return transaction identifiers after appending them; the distributed ledger being accessible by at least the stamp vendors and delivery entities; and
- a delivery entity for delivering the correspondence to the receiver address according to claim 13.

15. The system according to claim 14, further comprising a second distributed ledger for storing delivery files and return delivery transaction identifiers after appending them; the second distributed ledger being accessible by delivery entities.
